# EUROPÄISCHE PATENTSCHRIFT

(11) **EP 2 750 927 B1**
(45) Veröffentlichungstag und Bekanntmachung des Hinweises auf die Patenterteilung: **12.07.2017**
(21) Anmeldenummer: 12737501.2
(22) Anmeldetag: 19.07.2012
(51) Int. Cl.: B60N 2/04, B60N 2/20, B60N 2/30, B60N 2/22

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, NOTAMMENT SIÈGE DE VÉHICULE À MOTEUR

(30) Priorität: 29.08.2011 DE 102011113789
(43) Veröffentlichungstag der Anmeldung: 09.07.2014
(73) Patentinhaber: Adient Luxembourg Holding S.à r.l., 2453 Luxembourg (LU)
(72) Erfinder: BOEHM, André, 67659 Kaiserslautern (DE); FISCHER, Georg, 67722 Winnweiler (DE); RECKTENWALD, Ralph, 66629 Freisen (DE)
(74) Vertreter: Liedhegener, Ralf
(86) Internationale Anmeldenummer: PCT/EP2012/003054
(87) Internationale Veröffentlichungsnummer: WO 2013/029720

(56) Entgegenhaltungen:
- WO-A2-2007/006440
- DE-B3-102008 012 714

## Beschreibung

Die Erfindung betrifft einen Fahrzeugsitz, insbesondere einen Kraftfahrzeugsitz, mit den Merkmalen des Oberbegriffs des Anspruches 1.

Aus der DE 10 2008 012 714 B3 ist ein Fahrzeugsitz der eingangs genannten Art bekannt. Die Lehne weist auf beiden Fahrzeugsitzseiten einen Lehnenträger, der mittels eines Beschlags an der Basisstruktur verriegelbar angelenkt ist, und eine Lehnenstruktur, die auf beiden Fahrzeugsitzseiten mittels jeweils eines Gelenks am zugeordneten Lehnenträger angelenkt und mittels einer Verriegelungsvorrichtung mit dem Lehnenträger verriegelbar ist, auf. Auf einer Fahrzeugsitzseite ist eine Federeinheit vorgesehen, bestehend aus einer Gasfeder und einem Endanschlag für die Gasfeder. Die Federeinheit ist versetzt zum Beschlag an der Basisstruktur und versetzt zum Gelenk an einem Arm der Lehnenstruktur angelenkt.

Der Übergang von der Gebrauchsstellung in die Nichtgebrauchsstellung erfolgt durch Entriegeln und Schwenken der Lehnenstruktur nach vorne und des Lehnenträgers nach hinten. Die schwenkende Lehnenstruktur definiert einen Schwenkwinkel (relativ zum Lehnenträger). Wenn die Lehnenstruktur einen bestimmten Schwenkwinkelbereich erreicht, gelangt die Federeinheit in ihren Endanschlag, so dass die Anlenkstellen der im Endanschlag befindlichen Federeinheit (welche also ein Getriebeglied bildet), das Gelenk und der Beschlag temporär ein Viergelenk definieren, welches die aus Lehnenträger und Lehnenstruktur bestehende Kinematik steuert, solange sich die Lehnenstruktur in dem bestimmten Schwenkwinkelbereich befindet. In der Endphase des Übergangs in die Nichtgebrauchsstellung wird das temporäre Viergelenk wieder aufgehoben, und die Kinematik funktioniert als insbesondere ungesteuertes Zweigelenk.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die Kinematik der Lehne wird mittels des temporär bestehenden Mehrgelenks, insbesondere Viergelenks, gesteuert. Während dieser Phase des Bestehens des Viergelenks ist nur ein Freiheitsgrad vorhanden, d.h. es findet ein definierter Übergang, vorzugsweise in die Nichtgebrauchsstellung, statt. Die Verwendung einer Anschlagkoppel als Getriebeglied dieses Mehrgelenks ist kostengünstiger gegenüber einer Gasdruckfeder. Die Federkraft wird dann vorzugsweise kostengünstig durch eine neben der Anschlagkoppel (d.h. bezüglich des Kraftflusses alternativ) angeordnete Blattfeder oder durch einen in der Anschlagkoppel angeordneten Gummipuffer aufgebracht. Eine Blattfeder könnte in ihrer Strecklage auch allein ein Getriebeglied des besagten Mehrgelenks werden, jedoch sind die geometrischen Bedingungen bei der Anschlagkoppel genauer definierbar. Die Verwendung eines Mehrgelenks zur Steuerung einer Kinematik ist nicht auf den Übergang in eine Nichtgebrauchsstellung beschränkt. Es ist auch denkbar, damit eine andere Bewegung der Lehne, beispielsweise eine Neigungseinstellung, oder eine Höheneinstellung oder Neigungseinstellung der Sitzkissenstruktur zu steuern. Der Begriff "steuern" ist weit auszulegen, so dass das Mehrgelenk auch aus Teilen der Lehne bestehen oder diese tragen kann.

Die Anschlagkoppel wirkt zwischen der Basisstruktur und der Lehnenstruktur, und zwar versetzt zum Lehnenträger. Entsprechend sind die Anschlag- und Anlenkungselemente, vorliegend allgemein als Bolzen bezeichnet, für die Anschlagkoppel versetzt zu den Schwenkachsen der Lehnenstruktur und der Lehnenträger angeordnet, so dass sich ihr Abstand ändert während des Übergangs zwischen Gebrauchs- und Nichtgebrauchsstellungen des Fahrzeugsitzes mittels der Kinematik der Lehne. Die Anschlagkoppel ist an einem Ende für einen Anschlag an einem der Bolzen ausgebildet und am anderen Ende am anderen der Bolzen angelenkt. Die Anschlagkoppel weist vorzugsweise ein Langloch auf, dessen Enden, d.h. die umrandenden Materialpartien, den Anschlag zum Zusammenwirken mit dem einen der Bolzen bildet.

Die Blattfeder würde in ihrer entspannten Strecklage als Zugkoppel wirken, d.h. auf Zug belastet werden. Außerhalb der Strecklage biegt sich die Blattfeder geometrisch bedingt. In ihren gebogen Lagen baut die Blattfeder eine Spannung auf, aufgrund derer sie als Druckfeder wirken kann, beispielsweise um der Gewichtskraft der Lehne entgegen zu wirken, ebenso wie eine vorzugsweise zusätzlich vorhandene Lehnenkompensationsfeder. Eine gewisse Länge der Blattfeder erlaubt den Aufbau einer ausreichenden Spannung bereits bei geringen Krümmungen der Blattfeder, d.h. es besteht ein geringer Bauraumbedarf.

In der Nichtgebrauchsstellung ist die Lehnenstruktur vorzugsweise auf einer vorderen Abstützung, die vorzugsweise an der Basisstruktur ausgebildet, und auf einer hinteren Abstützung, die vorzugsweise an der Fahrzeugstruktur ausgebildet ist, abgelegt. Außer einer verbesserten Krafteinleitung beim Beladen des Fahrzeugsitzes in der Nichtgebrauchsstellung ist es damit bei der Rückkehr von der Nichtgebrauchsstellung in die Gebrauchsstellung möglich, dass die Lehnenunterkante entlang einer - der hinteren Abstützung benachbarten - Führungsbahn an der Fahrzeugstruktur gleitet, so dass wiederum nur ein Freiheitsgrad für die Kinematik vorliegt.

Der erfindungsgemäße Fahrzeugsitz gleicht in mehreren Ausgestaltungsmerkmalen den in der DE 10 2008 012 714 B3 und in der WO 2007/006440 A2 als zweites Ausführungsbeispiel beschriebenen Fahrzeugsitzen, weshalb deren diesbezüglicher Offenbarungsgehalt ausdrücklich einbezogen wird.

So kann beim Übergang von der Gebrauchsstellung in die Nichtgebrauchsstellung, wenn die entriegelte Lehnenstruktur nach vorne und der durch die Lehnenstruktur zwangsgesteuert entriegelte Lehnenträger nach hinten schwenkt, eine gegenüber einer Tischstellung tiefere Nichtgebrauchsstellung (Bodenstellung) erreicht werden, welche im Gegensatz zu einer Liegestellung zum Beladen geeignet ist. Eine Sitzkissenstruktur schwenkt vorzugsweise um etwas mehr als 180° nach vorne, wobei dann in der Nichtgebrauchsstellung die ursprüngliche Unterseite der Sitzkissenstruktur mehr oder weniger bündig und eben an die ursprüngliche Rückseite der dahinter gelegenen Lehnenstruktur anschließt.

Ein zwangsgesteuertes Entriegeln des Beschlags vereinfacht die vom Benutzer vorzunehmende Betätigung, indem dieser beispielsweise nur die Verriegelungsvorrichtung der Lehnenstruktur entriegeln muss, während die Lehnenstruktur das Entriegeln des Lehnenträgers vornimmt, also auf den Beschlag einwirkt. Vorzugsweise entriegelt die Lehnenstruktur den Beschlag mittels einer Entriegelungskoppel, die vorzugsweise starr ausgebildet ist. Für einen speziellen zeitlichen Bewegungsablauf kann die Entriegelungskoppel einen Leerweg vorsehen, beispielsweise eine Schlitz-Zapfen-Führung, mittels welcher das zwangsgesteuerte Entriegeln verzögert und auf einen bestimmten Schwenkwinkelbereich der Lehnenstruktur eingestellt werden kann.

Vorzugsweise ist auf jeder Fahrzeugsitzseite genau ein Lehnenträger vorgesehen, beispielsweise in Form einer Schwinge, wobei die beiden Lehnenträger durch Querverbindungen gekoppelt sein können. Dies stabilisiert die Lehne für den Normalgebrauch und für den Crashfall. Die für den Übergang zwischen Gebrauchsstellung und Nichtgebrauchsstellung vorgesehenen Federn oder Getriebeverbindungen brauchen nur auf einer Fahrzeugsitzseite vorhanden sein, vorzugsweise auf verschiedenen Fahrzeugsitzseiten. So kann die Blattfeder, die zur Einwirkung auf die Bewegung der Lehnenstruktur vorgesehen ist, bei einer Neigungseinstellung zur Kompensation des Lehnengewichts beitragen.

Die Blattfeder ist auch für Fahrzeugsitze mit einer anderen Kinematik als der beschriebenen geeignet.

Im Folgenden ist die Erfindung anhand eines in der Zeichnung dargestellten Ausführungsbeispiels mit einer Abwandlung näher erläutert. Es zeigen
- Fig. 1: eine linke Seitenansicht des Ausführungsbeispiels in der Gebrauchsstellung,
- Fig. 2: eine Fig. 1 entsprechende Seitenansicht in einer ersten Zwischenstellung beim Übergang in die Nichtgebrauchsstellung während des Bestehens des temporären Viergelenks,

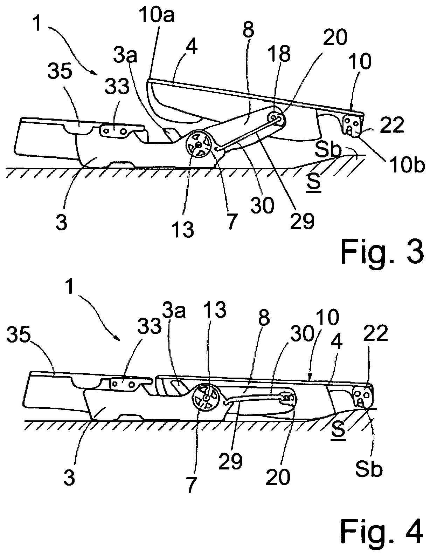

- Fig. 3: eine Fig. 1 entsprechende Seitenansicht in einer Zwischenstellung beim Übergang in die Nichtgebrauchsstellung nach Aufhebung des temporären Viergelenks,
- Fig. 4: eine Fig. 1 entsprechende Seitenansicht in der Nichtgebrauchsstellung,

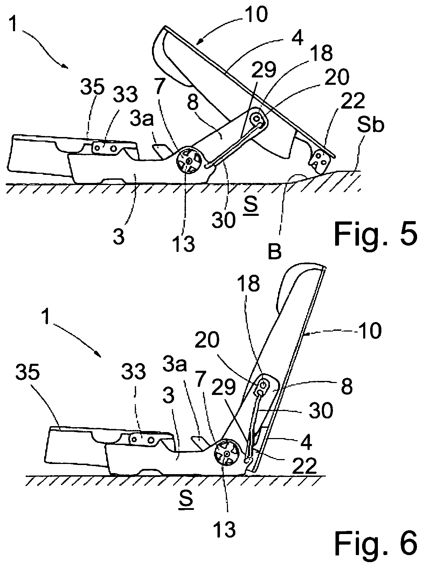

- Fig. 5: eine Fig. 4 entsprechende Seitenansicht in einer ersten Zwischenstellung bei der Rückkehr in die Gebrauchsstellung,
- Fig. 6: eine Fig. 4 entsprechende Seitenansicht in einer zweiten Zwischenstellung bei der Rückkehr in die Gebrauchsstellung,
- Fig. 7: eine rechte Seitenansicht des Ausführungsbeispiels in der Gebrauchsstellung,
- Fig. 8: eine Fig. 7 entsprechende Seitenansicht in einer Zwischenstellung beim Übergang in die Nichtgebrauchsstellung während des Bestehens des temporären Viergelenks,

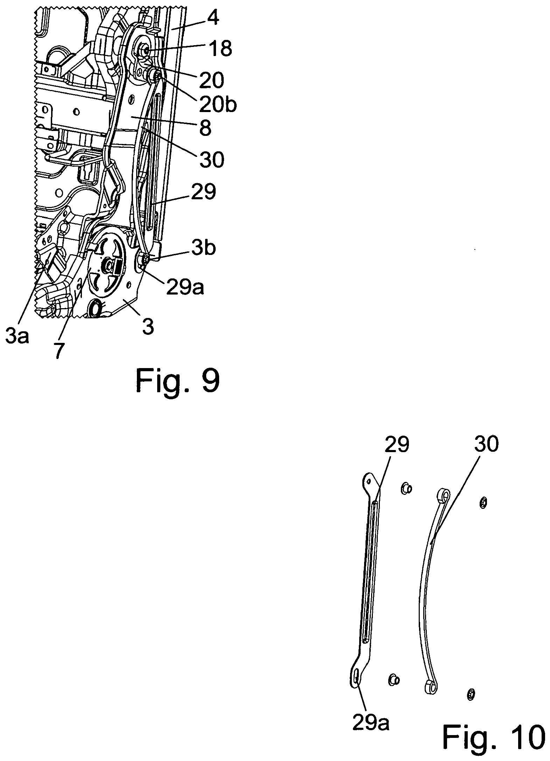

- Fig. 9: eine perspektivische Detailansicht des Ausführungsbeispiels in der Gebrauchsstellung im Bereich der Anschlagkoppel,
- Fig. 10: eine Explosionsdarstellung von Anschlagkoppel und einer als Blattfeder ausgebildeten Federeinheit, und
- Fig. 11: eine perspektivische Detailansicht einer Abwandlung mit einer als Gummipuffer ausgebildeten Federeinheit.

Im Ausführungsbeispiel ist ein Fahrzeugsitz 1 für eine hintere, insbesondere dritte, Sitzreihe eines Kraftfahrzeuges vorgesehen, wobei die Anordnung des Fahrzeugsitzes 1 innerhalb des Kraftfahrzeuges und dessen gewöhnliche Fahrtrichtung die nachfolgend verwendeten Richtungsangaben definieren. Als Teile seiner tragenden Struktur weist der Fahrzeugsitz 1 eine Basisstruktur 3 und eine Lehnenstruktur 4, welche in an sich bekannter Weise gepolstert ist, auf. Die Basisstruktur 3 ist vorliegend fest mit der Fahrzeugstruktur S des Kraftfahrzeuges verbunden, könnte aber auch mittels Sitzschienen relativ zur Fahrzeugstruktur S längseinstellbar sein. Ferner kann die Basisstruktur 3 in sich gelenkig ausgebildet sein. Auf beiden Fahrzeugsitzseiten ist an der Basisstruktur 3 je ein Beschlag 7 vorgesehen, mittels dessen je ein als Schwinge ausgebildeter Lehnenträger 8 relativ zur Basisstruktur 3 schwenkbar und verriegelbar angebracht ist. Die beiden Lehnenträger 8 definieren zusammen mit der gepolsterten Lehnenstruktur 4 die Lehne 10 des Fahrzeugsitzes 1. Es ist zunächst eine einsitzbare Gebrauchsstellung des Fahrzeugsitzes 1 beschrieben.

Der Beschlag 7 ist vorliegend als Rastbeschlag ausgebildet, wie er beispielsweise in der DE 20 2009 016 989 U1 beschrieben ist, deren diesbezüglicher Offenbarungsgehalt ausdrücklich einbezogen wird. Dabei ist eines der beiden Beschlagteile fest mit der Basisstruktur 3 an deren hinterem Ende und das andere Beschlagteil fest mit dem Lehnenträger 8 an dessen unterem Ende verbunden. Es ist aber auch möglich, als Beschlag 7 einen Getriebebeschlag mit Freischwenkfunktion zu verwenden, wie er beispielsweise in der DE 100 48 127 A1 beschrieben ist, deren diesbezüglicher Offenbarungsgehalt ebenfalls ausdrücklich einbezogen wird.

Der normalerweise verriegelte Beschlag 7 ist mittels eines ersten Betätigungselementes 11 entriegelbar, indem das vorliegend als Kulissenblech ausgebildete erste Betätigungselement 11 eine Welle 13 dreht. Es kann für jeden Beschlag 7 je eine Welle 13 oder für beide Beschläge 7 eine gemeinsame Welle 13 vorgesehen sein, welche die beiden Beschläge 7 koppelt und eine synchrone Entriegelung mittels eines einzigen ersten Betätigungselementes 11 erlaubt. Das erste Betätigungselement 11 ist vorliegend auf der näher zum Fahrzeuginneren gelegenen Fahrzeugsitzseite, kurz als Innenseite des Fahrzeugsitzes 1 bezeichnet, angeordnet. Die Welle 13 fluchtet mit der Drehachse der Beschläge 7, also der Schwenkachse der Lehnenträger 8 relativ zur Basisstruktur 3.

Für eine Neigungseinstellung der Lehne 10 ist der Beschlag 7 (in der Ausbildung als Rastbeschlag) mittels eines zweiten Betätigungselementes 15, welches vorliegend als Hebelgriff ausgebildet ist, entriegelbar. Das zweite Betätigungselement 15 kann drehfest mit dem ersten Betätigungselement 11 verbunden sein, wirkt aber vorliegend direkt auf die Welle 13 ein, wobei eine Mitnahme oder eine Entkopplung in eine Drehrichtung vorgesehen sein kann. Das zweite Betätigungselement 15 ist vorliegend auf der näher zum Fahrzeugäußeren gelegenen Fahrzeugsitzseite, kurz als Außenseite des Fahrzeugsitzes 1 bezeichnet, angeordnet. In einer abgewandelten Ausführung ist kein gesondertes zweites Betätigungselement 15 vorgesehen, sondern für die Neigungseinstellung der Lehne 10 wird der Beschlag 7 beispielsweise mittels des ersten Betätigungselementes 11 betätigt.

Eine Lehnenkompensationsfeder 17, welche vorliegend als Gasfeder ausgebildet ist und beispielsweise auf der Innenseite des Fahrzeugsitzes 1 angeordnet ist, wirkt zwischen der Basisstruktur 3 und dem Lehnenträger 8. Bei entriegelten Beschlägen 7 kompensiert die Lehnenkompensationsfeder 17 wenigstens einen Teil des Gewichtes der gesamten Lehne. Die Lehnenkompensationsfeder 17 wirkt also in Vorwärtsschwenkrichtung der Lehne.

Die Lehnenstruktur 4 ist auf beiden Fahrzeugsitzseiten mittels eines als Drehlager ausgebildeten Gelenks 18 am Lehnenträger 8 angelenkt. Das Gelenk 18 ist zwischen dem oberen Ende des Lehnenträgers 8 und der Lehnenstruktur 4 in deren unterer Hälfte vorgesehen. Die durch die Gelenke 18 definierten Drehachsen fluchten miteinander und definieren die Schwenkachse der Lehnenstruktur 4 relativ zu den Lehnenträgern 8. Die Rückseite der Lehnenstruktur 4 weist in der Gebrauchsstellung im Wesentlichen nach hinten, leicht schräg zur Horizontalen. Die Gelenke 18 sind so aufgebaut, dass jeweils ein zentraler Gelenkbolzen vorgesehen ist, welcher drehfest mit der Lehnenstruktur 4 verbunden ist. Auf diesem Gelenkbolzen ist jeweils - axial versetzt zum zugeordneten Lehnenträger 8 auf dessen Außenseite - ein Arm 20 angebracht. Die beiden Arme 20 sind somit drehfest mit der Lehnenstruktur 4 verbunden.

Im Bereich des unteren Endes der Lehnenstruktur 4 ist auf wenigstens einer Fahrzeugsitzseite, vorliegend auf beiden, eine Verriegelungsvorrichtung 22 vorgesehen. Die Verriegelungsvorrichtung 22 ist vorliegend als Schloss ausgebildet, wie beispielsweise in der DE 203 02 007 U1 beschrieben, deren diesbezüglicher Offenbarungsgehalt ausdrücklich einbezogen wird. Mittels dieser Verriegelungsvorrichtung 22 an der Lehnenstruktur 4 ist die Lehnenstruktur 4 lösbar mit dem zugeordneten Lehnenträger 8 verriegelt, genauer gesagt mit einem Gegenelement am zugeordneten Lehnenträger 8, vorliegend einem Schließbügel des Lehnenträgers 8, wobei Verriegelungsvorrichtung 22 und Gegenelement in ihren Positionen vertauscht sein können. Die Lehne 10 bildet dadurch in der Gebrauchsstellung eine kinematische Einheit. Mittels der Beschläge 7 sind mehrere Gebrauchsstellungen dieser kinematischen Einheit einstellbar, d.h. die Lehne 10, insbesondere die Lehnenstruktur 4, ist neigungseinstellbar. Statt der Kombination aus Gelenk 18 und Verriegelungsvorrichtung 22 kann auch ein Beschlag in der Art des Beschlags 7 vorgesehen sein.

Auf einer Fahrzeugsitzseite, vorliegend der Fahrzeugsitzseite mit der Lehnenkompensationsfeder 17, also der Innenseite des Fahrzeugsitzes 1, ist am Arm 20 eine Entriegelungskoppel 26 mit einem ihrer beiden Enden angelenkt. An ihrem anderen Ende ist die Entriegelungskoppel 26 mittels einer Schlitz-Zapfen-Führung 28 am ersten Betätigungselement 11 angelenkt, wobei vorliegend die Entriegelungskoppel 26 den Zapfen und das erste Betätigungselement 11 den Schlitz aufweist. Die umgekehrte Zuordnung ist auch möglich.

Ferner ist auf einer Fahrzeugsitzseite, vorliegend der gegenüber der Lehnenkompensationsfeder 17 liegenden Fahrzeugsitzseite, also der Außenseite des Fahrzeugsitzes 1, eine Anschlagkoppel 29 vorgesehen. Die längliche Anschlagkoppel 29 ist starr ausgebildet. An ihrem einen Ende, vorliegend dem unteren Ende, weist sie ein Langloch 29a auf, mittels dessen sie einen ersten Bolzen 3b umschließt, welcher an der Basisstruktur 3, versetzt zum Beschlag 7 und damit versetzt zur Schwenkachse der Lehnenträger 8, angebracht ist. An ihrem anderen Ende, vorliegend dem oberen Ende, ist die Anschlagkoppel 29 an einem zweiten Bolzen 20b angelenkt, welcher an dem auf dieser Fahrzeugsitzseite vorgesehenen Arm 20, also versetzt zum Gelenk 18 und damit versetzt zur Schwenkachse der Lehnenstruktur 4, angebracht ist.

Auf der gleichen Fahrzeugsitzseite, also der Außenseite des Fahrzeugsitzes 1, ist eine Federeinheit 30 vorgesehen, welche in der Gebrauchsstellung vorzugsweise vorgespannt ist. Lehnenkompensationsfeder 17 und Entriegelungskoppel 26 einerseits sowie Anschlagkoppel 29 und Federeinheit 30 andererseits sind vorliegend jeweils auf genau einer Fahrzeugsitzseite vorgesehen, können aber auch auf beiden Fahrzeugsitzseiten vorgesehen sein.

Vorzugsweise ist die Federeinheit 30 als Blattfeder 30 ausgebildet, welche (jeweils mit ihrem Endabschnitt) einerseits auf dem ersten Bolzen 3b und andererseits auf dem zweiten Bolzen 20b drehbar angebracht ist. Die als Blattfeder ausgebildete Federeinheit 30 kann aber auch anderweitig versetzt zu den Schwenkachsen der Lehnenträger 8 und der Lehnenstruktur 4 angebracht sein. Die als Blattfeder ausgebildete Federeinheit 30 ist in ihrer Strecklage entspannt und baut beim Biegen eine Spannung auf, so dass sie dann als Druckfeder wirken kann.

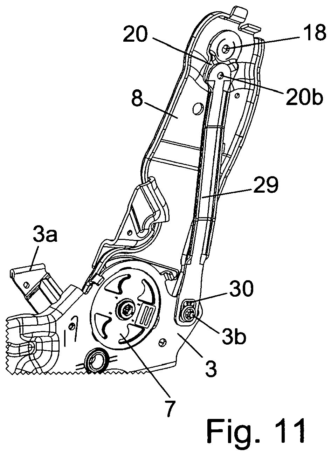

In einer Abwandlung (Fig. 11) zum Ausführungsbeispiel ist die Federeinheit 30 als Gummipuffer ausgebildet, welcher beispielsweise zwischen dem ersten Bolzen 3b und der Anschlagkoppel 29 wirkt, vorzugsweise indem er im Langloch 29a den Raum zwischen dem ersten Bolzen 3b und den beiden Enden des Langlochs 29a der Anschlagkoppel 29 füllt. Auch diese Federeinheit 30 wirkt als Druckfeder, wenn die Anschlagkoppel 29 sich relativ zum ersten Bolzen 3b verschiebt, also insbesondere wenn sich weiter außen gelegenen Ende des Langlochs 29a vom ersten Bolzen 3b entfernt und sich das weiter innen gelegenen Endes des Langlochs 29a dem ersten Bolzen 3b nähert.

Auf beiden Fahrzeugsitzseiten ist je eine Schwinge 33 mit einem Ende angelenkt. Das andere Ende jeder Schwinge 33 ist an einer Sitzkissenstruktur 35 angelenkt, welche in an sich bekannter Weise gepolstert ist. Die einander entsprechenden Gelenke auf den beiden Fahrzeugsitzseiten fluchten untereinander. Statt mittels der Schwingen 33 und ihren jeweils zwei Schwenkachsen kann die Sitzkissenstruktur 35 in abgewandelter Ausführung direkt an der Basisstruktur 3 angelenkt sein, also mittels einer einzigen Schwenkachse, die durch zwei miteinander fluchtende Gelenke definiert wird. Die Sitzkissenstruktur 35 definiert zusammen mit ihrer Polsterung das Sitzkissen des Fahrzeugsitzes 1. Zwischen Basisstruktur 3 und Schwingen 33 und/oder zwischen Schwingen 33 und Sitzkissenstruktur 35 können Federn wirksam sein und eine Vorspannung aufbauen. Die Unterseite der Sitzkissenstruktur 35 weist in der Gebrauchsstellung im Wesentlichen nach unten, leicht schräg zur Vertikalen. In der Gebrauchsstellung des Fahrzeugsitzes 1 sind die Sitzkissenstruktur 35 und die Lehnenstruktur 4 (oder den Lehnenträgern 8 oder der Basisstruktur 3) beispielsweise miteinander verriegelt oder wirken formschlüssig mittels Anschlägen oder dergleichen zusammen.

Der Fahrzeugsitz 1 kann von der Gebrauchsstellung in eine flache Boden- oder Nichtgebrauchsstellung überführt werden. Hierzu werden die Verriegelungsvorrichtungen 22 entriegelt, gegebenenfalls auch die Verriegelung mit der Sitzkissenstruktur 35 geöffnet, und die Lehnenstruktur 4 relativ zu den Lehnenträgern 8 um die Gelenke 18 nach vorne geschwenkt. Die vorgespannte Federeinheit 30 wirkt (als sich entspannende Druckfeder) unterstützend für diese Bewegung der Lehnenstruktur 4. Die Schlitz-Zapfen-Führung 28 durchfährt ihren Leerweg. Wenn die Sitzkissenstruktur 35 entriegelt ist oder in einer ungefähr vertikalen Zwischenstellung der Lehnenstruktur 4 von dieser freigegeben wird, schwenkt die Sitzkissenstruktur 35 vor, vorliegend um etwas mehr als 180°, so dass die ursprüngliche Unterseite der Sitzkissenstruktur 35 horizontal ausgerichtet ist und nach oben weist. Diese Bewegung wird vorliegend durch die besagte, durch die Federn an den Schwingen 33 aufgebaute Vorspannung unterstützt, erfolgt also automatisch.

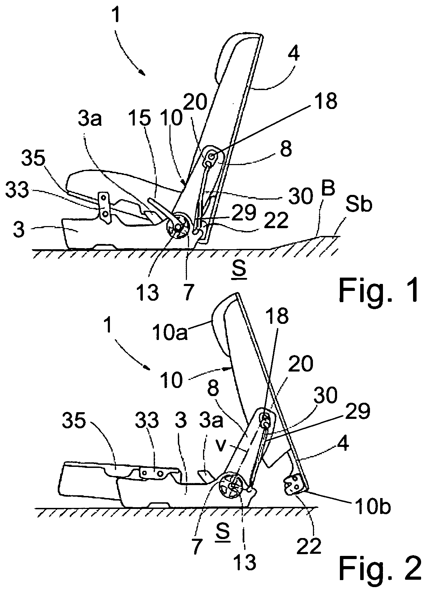

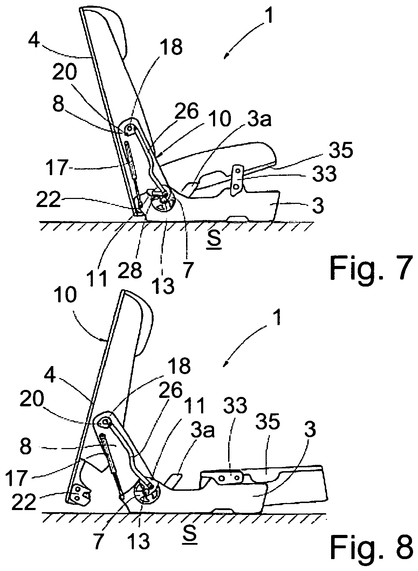

In einer besonderen Zwischenstellung der Lehnenstruktur 4, d.h. bei einem bestimmten Schwenkwinkel oder wenigstens in einem Bereich um diesen bestimmten Schwenkwinkel der Lehnenstruktur 4 ist der Leerweg der Schlitz-Zapfen-Führung 28 vollständig durchfahren. Nun nimmt die Entriegelungskoppel 26 das erste Betätigungselement 11 mit, wodurch die Beschläge 7 zwangsgesteuert entriegelt werden (Fig. 8). Nachdem beide Beschläge 7 entriegelt sind und die Lehnenstruktur 4 (und die Lehnenträger 8) einen bestimmten Schwenkwinkelbereich erreichen, gelangt die auf Zug beanspruchte Anschlagkoppel 29 mit dem ersten Bolzen 3b in Anschlag, also mit dem weiter außen gelegenen Ende des Langlochs 29a in Anlage an den ersten Bolzen 3b (Fig. 2). Die Federeinheit 30 nimmt nahezu ihre entspannte Lage ein, also bei einer Ausbildung als Blattfeder ihre Strecklage und bei einer Ausbildung als Gummipuffer den undeformierten Zustand. Um ein Überschreiten der entspannten Lage durch ungünstige Toleranzlagen zu vermeiden, ist die Federeinheit 30 vorzugsweise so ausgelegt, dass sie ihre entspannte Lage noch nicht vollständig erreicht hat, wenn die Abschlagkoppel 29 mit dem ersten Bolzen 3b in Anschlag gelangt. Wegen der entriegelten Beschläge 7 können die Lehnenträger 8 nach hinten in die Horizontale geschwenkt werden, und zugleich kann die Lehnenstruktur 4 ihre Schwenkbewegung fortsetzen in Richtung zur Horizontalen. Grundsätzlich hätte diese Kinematik mehrere Freiheitsgrade.

Durch die Bolzen 3b und 20b der in Anschlag befindlichen, auf Zug beanspruchten Anschlagkoppel 29 sowie durch das Gelenk 18 und den Beschlag 7 auf dieser Fahrzeugsitzseite als Gelenke - oder in andere Betrachtungsweise durch die Anschlagkoppel 29, den Arm 20, den Lehnenträger 8 und den Versatz zwischen dem Beschlag 7 und dem benachbarten ersten Bolzen 3b als Getriebeglieder - wird jedoch ein Viergelenk V definiert. Das Viergelenk V besteht temporär, d.h. während des Übergangs von der Gebrauchsstellung in die Nichtgebrauchsstellung über den bestimmten Schwenkwinkelbereich, also solange sich die Lehnenstruktur 4 in diesem bestimmten Schwenkwinkelbereich befindet. Das temporäre Viergelenk V steuert die (aus entriegelten Lehnenträgern 8 und entriegelter Lehnenstruktur 4 bestehende) Kinematik der Lehne 10. Die so gebildete Viergelenks-Kinematik-Steuerung reduziert die Freiheitsgrade der Bewegung auf einen einzigen, d.h. die Bewegungen von Lehnenstruktur 4 und Lehnenträgern 8 sind gekoppelt. Die Anschlagkoppel 29 wirkt als Zugkoppel. Durch Nach-Vorne-Drücken der (an der Lehnenstruktur 4 vorgesehenen) Lehnenoberkante 10a lässt sich die Lehne 10 nach hinten unten bewegen. Dabei findet kein Kontakt zur Fahrzeugstruktur S statt. Die Lehnenkompensationsfeder 17 verhindert das unkontrollierte Absacken durch Gewichtskraft. Die Lehnenkompensationsfeder 17 befindet sich nie in ihrem Endanschlag.

In der Endphase des Übergangs in die Nichtgebrauchsstellung, d.h. wenn die Lehnenstruktur 4 (und die Lehnenträger 8) den bestimmten Schwenkwinkelbereich verlässt, verlässt die Anschlagkoppel 29 den ersten Bolzen 3b und spannt die Federeinheit 30 wieder, d.h. das temporäre Viergelenk V wird wieder aufgehoben, und die Kinematik funktioniert als ungesteuertes (oder anders gesteuertes) Zweigelenk. Beide Federn, d.h. die Lehnenkompensationsfeder 17 und die (als sich spannende Druckfeder wirkende) Federeinheit 30, wirken der Gewichtskraft entgegen. Durch die Lage des Schwerpunktes der Lehnenstruktur 4 vor den Gelenken 18 kippt die Lehnenstruktur 4 nach vorne auf ihre vordere Abstützung 3a, die beispielsweise an der Basisstruktur 3 ausgebildet ist. Durch Drücken auf die nunmehr oben liegende Rückseite der Lehnenstruktur 4 kann die (an der Lehnenstruktur 4 vorgesehene) Lehnenunterkante 10b auf der hinteren Abstützung Sb, die beispielsweise an der Fahrzeugstruktur S ausgebildet ist, abgelegt werden. Die Nichtgebrauchsstellung ist erreicht.

Sitzkissenstruktur 35, Lehnenträger 8 und Lehnenstruktur 4 sind wenigstens näherungsweise in die Horizontale gelangt. Die ursprüngliche Unterseite der Sitzkissenstruktur 35 schließt mehr oder weniger bündig und eben an die ursprüngliche Rückseite der dahinter gelegenen Lehnenstruktur 4 an. Die Sicherung der Nichtgebrauchsstellung kann durch das Eigengewicht erfolgen, wenn dieses größer als die Kraft der Lehnenkompensationsfeder 17 und der Federeinheit 30 ist, oder durch eine Verriegelung, beispielsweise mittels der Beschläge 7 und/oder Verriegelungsvorrichtungen 22 an entsprechenden Gegenelementen.

Im vorliegenden Ausführungsbeispiel ist die Verbindungslinie der Bolzen 3b und 20b in der bevorzugten Gebrauchsstellung um 23° relativ zur Vertikalen nach hinten geneigt, schwenkt bis zur Bildung des temporären Viergelenks V um 5°, während des Bestehens des temporären Viergelenks V um 51°, und nach Aufhebung des temporären Viergelenks V noch um weitere 18°.

Zur Rückkehr, d.h. dem Übergang von der Nichtgebrauchsstellung in die Gebrauchsstellung, wird die Lehnenoberkante 10a, gegebenenfalls nach Entriegeln, nach hinten gezogen. Die Lehnenunterkante 10b gleitet entlang einer Führungsbahn B, die an der Fahrzeugstruktur S zwischen der hinteren Abstützung Sb und der Befestigung der Basisstruktur 3 an der Fahrzeugstruktur S ausgebildet ist, wodurch sich die Lehnenstruktur 4 aufwärts bewegt. Die Lehnenkompensationsfeder 17 unterstützt die Aufwärtsbewegung. Die Anschlagkoppel 29 ist noch nicht mit dem ersten Bolzen 3b in Anschlag, so dass kein temporäres Viergelenk V definiert wird, sondern die noch gespannte Federeinheit 30 ebenfalls die Aufwärtsbewegung unterstützt. Lehnenstruktur 4 und Lehnenträger 8 bewegen sich als freie Zweigelenks-Kinematik in die letzte Phase des Anhebens. Die beiden Federn, d.h. Lehnenkompensationsfeder 17 und Federeinheit 30, sind geometrisch so angeordnet, dass jetzt ihre aufrichtende Kraft deutlich größer ist als die Gewichtskraft. Zunächst verriegeln die Beschläge 7 wieder, dann die Verriegelungsvorrichtungen 22. Die Gebrauchsstellung ist wieder erreicht.

Wenn der Benutzer bei der Aufwärtsbewegung der Lehnenstruktur 4 diese entgegen der Kraft der beiden Federn 17 und 30 in Anlage an die Führungsbahn B halten könnte, bestünde die Gefahr, dass die Auslenkung der Federeinheit 30, insbesondere in der Ausbildung als Blattfeder, den Bereich der plastischen Deformation erreichen könnte. Um diesen Missbrauchsfall zu meiden, kommt dann vor dessen Eintritt die Anschlagkoppel 29 mit dem weiter innen gelegenen Ende des Langlochs 29a in Anschlag an den ersten Bolzen 3b, wirkt als Druckkoppel, und begrenzt die Auslenkung der Federeinheit 30. Dabei entsteht wieder ein temporäres Viergelenk, das die weitere Aufwärtsbewegung der Lehnenstruktur 4 steuert, bis in der Endphase der Bewegung das besagte Ende des Langlochs 29a wieder den ersten Bolzen 3b verlässt und die Beschläge 7 und die Verriegelungsvorrchtungen 22 wieder verriegeln können.

Bei einem Wechsel in eine andere Gebrauchsstellung, d.h. eine Neigungseinstellung der Lehne, ist die Kinematik der Lehne 10 nach Entriegeln der Beschläge 7 ein Eingelenk. Dessen Bewegung nach vorne wird durch die beiden Federn 17 und 30 unterstützt, d.h. die Federeinheit 30 kompensiert ebenfalls einen Teil des Gewichts der Lehne 10.

### Bezugszeichenliste

- 1: Fahrzeugsitz
- 3: Basisstruktur
- 3a: vordere Abstützung
- 3b: erster Bolzen
- 4: Lehnenstruktur
- 7: Beschlag
- 8: Lehnenträger
- 10: Lehne
- 10a: Lehnenoberkante
- 10b: Lehnenunterkante
- 11: erstes Betätigungselement
- 13: Welle
- 15: zweites Betätigungselement
- 17: Lehnenkompensationsfeder
- 18: Gelenk
- 20: Arm
- 20b: zweiter Bolzen
- 22: Verriegelungsvorrichtung
- 26: Entriegelungskoppel
- 28: Schlitz-Zapfen-Führung
- 29: Anschlagkoppel
- 29a: Langloch
- 30: Federeinheit
- 33: Schwinge
- 35: Sitzkissenstruktur
- B: Führungsbahn
- S: Fahrzeugstruktur
- Sb: hintere Abstützung
- V: temporäres Viergelenk

## Patentansprüche

1. Fahrzeugsitz, insbesondere Kraftfahrzeugsitz, mit
a) einer Basisstruktur (3), die mit der Fahrzeugstruktur (S) zu verbinden ist und an der ein erster Bolzen (3b) angeordnet ist,
b) wenigstens einem Lehnenträger (8), der mittels wenigstens eines Beschlags (7) an der Basisstruktur (3) verriegelbar angelenkt ist, wobei der erste Bolzen (3b) zur Drehachse des Beschlags (7) parallel versetzt ist,
c) einer Lehnenstruktur (4), die mittels eines Gelenks (18) am Lehnenträger (8) angelenkt und mittels einer Verriegelungsvorrichtung (22) mit dem Lehnenträger (8) verriegelbar ist und an der ein zweiter Bolzen (20b) angeordnet ist, welcher parallel zum Gelenk (18) versetzt ist,
d) einer die Lehnenträger (8) und Lehnenstruktur (4) aufweisenden Lehne (10), die mittels einer Kinematik relativ zur Basisstruktur (3) beweglich ist, um den Fahrzeugsitz (1) von wenigstens einer einsitzbaren Gebrauchsstellung in eine Nichtgebrauchsstellung oder in eine weitere Gebrauchsstellung zu überführen und zurück, wobei temporär ein Mehrgelenk, insbesondere Viergelenk (V), besteht, welches die Kinematik steuert,
**dadurch gekennzeichnet, dass**
e) eine starre Anschlagkoppel (29) vorgesehen ist, welche temporär mit dem einen der beiden Bolzen (3b, 20b) in Anschlag gelangt, um ein Getriebeglied des temporären Viergelenks (V) oder anderen Mehrgelenks zu bilden, und welche an dem anderen der beiden Bolzen (3, 20b) angelenkt ist.

2. Fahrzeugsitz nach Anspruch 1, **dadurch gekennzeichnet, dass** die Anschlagkoppel (29) ein Langloch (29a) aufweist, mittels dessen sie den einen der beiden Bolzen (3b, 20b) umschließt.

3. Fahrzeugsitz nach Anspruch 1 oder 2, **dadurch gekennzeichnet, dass** die beiden Bolzen (3b, 20b), das Gelenk (18) und der Beschlag (7) das temporäre Viergelenk (V) definieren, welches die Kinematik steuert, solange sich die Lehnenstruktur (4) in einem bestimmten Schwenkwinkelbereich befindet.

4. Fahrzeugsitz nach einem der vorhergehenden Ansprüche, **dadurch gekennzeichnet, dass** die Anschlagkoppel (29) als Zugkoppel wirkt, wenn das temporäre Viergelenk (V) besteht.

5. Fahrzeugsitz nach einem der vorhergehenden Ansprüche, **dadurch gekennzeichnet, dass** die Anschlagkoppel (29) zur Meidung eines Missbrauchsfalls als Druckkoppel wirkt, wenn der Fahrzeugsitz (1) von der Nichtgebrauchsstellung in die wenigstens eine einsitzbare Gebrauchsstellung zurückkehrt.

6. Fahrzeugsitz nach einem der vorhergehenden Ansprüche, **dadurch gekennzeichnet, dass** neben der Anschlagkoppel (29) eine Federeinheit (30) angeordnet ist, welche insbesondere als Blattfeder ausgebildet ist, und welche als Druckfeder wirkt.

7. Fahrzeugsitz nach Anspruch 6, **dadurch gekennzeichnet, dass** die als Blattfeder ausgebildete Federeinheit (30) an den beiden Bolzen (3b, 20b) angebracht ist, und/oder dass die als Blattfeder ausgebildete Federeinheit (30) sich nahe ihrer Strecklage befindet, wenn das temporäre Viergelenk (V) besteht.

8. Fahrzeugsitz nach einem der vorhergehenden Ansprüche, **dadurch gekennzeichnet, dass** in der Endphase des Übergangs in die Nichtgebrauchsstellung das temporäre Viergelenk (V) wieder aufgehoben wird und die Kinematik als insbesondere ungesteuertes Zweigelenk funktioniert.

9. Fahrzeugsitz nach einem der vorhergehenden Ansprüche, **dadurch gekennzeichnet, dass** beim Übergang von der Gebrauchsstellung in die Nichtgebrauchsstellung zunächst nur die Verriegelungsvorrichtung (22) entriegelt und die Lehnenstruktur (4) schwenkt, welche in einer Zwischenstellung in einem bestimmten Schwenkwinkelbereich den Beschlag (7) zwangsgesteuert entriegelt.

10. Fahrzeugsitz nach einem der vorhergehenden Ansprüche, **dadurch gekennzeichnet, dass** in der Gebrauchsstellung die mit dem Lehnenträger (8) verriegelte Lehnenstruktur (4) mittels des Beschlags (7) neigungseinstellbar ist.

## Claims

1. A vehicle seat, in particular motor vehicle seat, having
a) a base structure (3) which is to be connected to the vehicle structure (S) and on which a first pin (3b) is arranged,
b) at least one backrest support (8) which is articulated in a lockable manner on the base structure (3) by means of at least one fitting (7), the first pin (3b) being offset in parallel with respect to the rotational axis of the fitting (7),
c) a backrest structure (4) which is articulated on the backrest support (8) by means of a joint (18) and can be locked to the backrest support (8) by means of a locking apparatus (22) and on which a second pin (20b) is arranged which is offset in parallel with respect to the joint (18),
d) a backrest (10) which has the backrest supports (8) and backrest structure (4) and can be moved relative to the base structure (3) by means of a kinematic system, in order to transfer the vehicle seat (1) from at least one use position, in which it can be sat on, into a non-use position or into a further use position and back again, a multiple-bar linkage, in particular a four-bar linkage (V), existing temporarily which controls the kinematic system,
**characterized in that**
e) a rigid stop link (29) is provided which comes into contact temporarily with one of the two pins (3b, 20b), in order to form a mechanism element of the temporary four-bar linkage (V) or other multiple-bar linkage, and which is articulated on the other of the two pins (3, 20b).

2. The vehicle seat as claimed in claim 1, **characterized in that** the stop link (29) has a slot (29a), by means of which it encloses one of the two pins (3b, 20).

3. The vehicle seat as claimed in claim 1 or 2, **characterized in that** the two pins (3b, 20b), the joint (18) and the fitting (7) define the temporary four-bar linkage (V) which controls the kinematic system as long as the backrest structure (4) is situated in a certain pivoting angle region.

4. The vehicle seat as claimed in one of the preceding claims, **characterized in that** the stop link (29) acts as a tensile link when the temporary four-bar linkage (V) is in existence.

5. The vehicle seat as claimed in one of the preceding claims, **characterized in that**, in order to avoid a case of misuse, the stop link (29) acts as a pushing link when the vehicle seat (1) returns from the non-use position into the at least one use position, in which it can be sat on.

6. The vehicle seat as claimed in one of the preceding claims, **characterized in that** a spring unit (30) is arranged next to the stop link (29), which spring unit (30) is configured, in particular, as a leaf spring and which acts as a compression spring.

7. The vehicle seat as claimed in claim 6, **characterized in that** the spring unit (30) which is configured as a leaf spring is attached to the two pins (3b, 20b), and/or **in that** the spring unit (30) which is configured as a leaf spring is situated close to its stretched position when the temporary four-bar linkage (V) is in existence.

8. The vehicle seat as claimed in one of the preceding claims, **characterized in that**, in the end phase of the transition into the non-use position, the temporary four-bar linkage (V) is canceled again and the kinematic system functions as an, in particular, uncontrolled two-bar linkage.

9. The vehicle seat as claimed in one of the preceding claims, **characterized in that**, during the transition from the use position into the non-use position, first of all only the locking apparatus (22) unlocks and the backrest structure (4) pivots which unlocks the fitting (7) in a positively controlled manner in an intermediate position in a certain pivoting angle region.

10. The vehicle seat as claimed in one of the preceding claims, **characterized in that**, in the use position, the inclination of the backrest structure (4) which is locked to the backrest support (8) can be set by means of the fitting (7).

## Revendications

1. Siège de véhicule, en particulier siège de véhicule automobile, comprenant
a) une structure de base (3) qui doit être raccordée à la structure de véhicule (S) et sur laquelle est disposé un premier boulon (3b),
b) au moins un support de dossier (8) qui est articulé de manière à pouvoir être verrouillé au moyen d'au moins une ferrure (7) à la structure de base (3), le premier boulon (3b) étant décalé parallèlement à l'axe de rotation de la ferrure (7),
c) une structure de dossier (4) qui est articulée au support de dossier (8) au moyen d'une articulation (18) et qui peut être verrouillée au support de dossier (8) au moyen d'un dispositif de verrouillage (22) et sur laquelle est disposé un deuxième boulon (20b) qui est décalé parallèlement à l'articulation (18),
d) un dossier (10) présentant le support de dossier (8) et la structure de dossier (4), qui peut être déplacé par rapport à la structure de base (3) au moyen d'une cinématique, afin de transférer le siège de véhicule (1) d'au moins une position d'utilisation permettant de s'asseoir dans une position de non-utilisation ou dans une position d'utilisation supplémentaire, et vice versa, une articulation multiple, en particulier un quadrilatère articulé (V) étant établie temporairement, laquelle commande la cinématique,
**caractérisé en ce**
e) **qu'**il est prévu un couplage de butée rigide (29) qui vient buter temporairement avec l'un des deux boulons (3b, 20b) afin de former un organe de transmission du quadrilatère articulé temporaire (V) ou d'une autre articulation multiple, et qui est articulé à l'autre des deux boulons (3, 20b).

2. Siège de véhicule selon la revendication 1, **caractérisé en ce que** le couplage de butée (29) présente un trou oblong (29a) au moyen duquel il entoure l'un des deux boulons (3b, 20b).

3. Siège de véhicule selon la revendication 1 ou 2, **caractérisé en ce que** les deux boulons (3b, 20b), l'articulation (18) et la ferrure (7) définissent le quadrilatère articulé temporaire (V) qui commande la cinématique tant que la structure de dossier (4) se trouve dans une plage d'angle de pivotement définie.

4. Siège de véhicule selon l'une quelconque des revendications précédentes, **caractérisé en ce que** le couplage de butée (29) agit en tant que couplage de traction lorsque le quadrilatère articulé temporaire (V) est établi.

5. Siège de véhicule selon l'une quelconque des revendications précédentes, **caractérisé en ce que** le couplage de butée (29) agit en tant que couplage de pression pour éviter un usage abusif lorsque le siège de véhicule (1) revient de la position de non-utilisation dans l'au moins une position d'utilisation permettant de s'asseoir.

6. Siège de véhicule selon l'une quelconque des revendications précédentes, **caractérisé en ce qu'**en plus du couplage de butée (29), il est prévu une unité de ressort (30) qui est réalisée notamment sous forme de ressort à lame et qui agit en tant que ressort de compression.

7. Siège de véhicule selon la revendication 6, **caractérisé en ce que** l'unité de ressort (30) réalisée en tant que ressort à lame est montée sur les deux boulons (3b, 20b) et/ou **en ce que** l'unité de ressort (30) réalisée en tant que ressort à lame se trouve à proximité de sa position étirée lorsque le quadrilatère articulé temporaire (V) est établi.

8. Siège de véhicule selon l'une quelconque des revendications précédentes, **caractérisé en ce que** dans la phase finale du transfert à la position de non-utilisation, le quadrilatère articulé temporaire (V) est à nouveau supprimé et la cinématique fonctionne en tant qu'articulation double notamment non commandée.

9. Siège de véhicule selon l'une quelconque des revendications précédentes, **caractérisé en ce que** lors du transfert de la position d'utilisation dans la position de non-utilisation, premièrement seulement le dispositif de verrouillage (22) est déverrouillé et la structure de dossier (4) pivote, celle-ci, dans une position intermédiaire dans une plage d'angle de pivotement déterminée, déverrouillant par force la ferrure (7).

10. Siège de véhicule selon l'une quelconque des revendications précédentes, **caractérisé en ce que** dans la position d'utilisation, la structure de dossier (4) verrouillée au support de dossier (8) peut être ajustée en inclinaison au moyen de la ferrure (7).
